(19) Europäisches Patentamt

European Patent Office

Office européen des brevets

(11) **EP 4 198 463 A1**

(12) **EUROPEAN PATENT APPLICATION**

(43) Date of publication:
**21.06.2023 Bulletin 2023/25**

(21) Application number: **21215756.4**

(22) Date of filing: **17.12.2021**

(51) International Patent Classification (IPC):
**G01G 19/02** [(2006.01)]

(52) Cooperative Patent Classification (CPC):
**G01G 19/02**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NFIDENT DWC LLC**
**Dubai (AE)**

(72) Inventors:
- **MUBARAK, Sameer George Anton**
  **Amman (JO)**
- **MUBARAK, Ramez Sameer George**
  **Boston (US)**
- **MOJAHED, Eyad Abdel Razak Mohammad**
  **Amman (JO)**

(74) Representative: **Cabinet Beau de Loménie**
**158, rue de l'Université**
**75340 Paris Cedex 07 (FR)**

(54) **METHOD AND SYSTEM FOR MEASURING WEIGHT OF CARGO OF AN ARTICULATED VEHICLE**

(57) The present invention concerns a method and system for measuring weight of a cargo of an articulated vehicle (1), wherein the weight of the cargo is calculated on the basis of the values of first, second and total tare weights, first and second distances, and first, second and total loaded weights. The first and second tare weights are tare weight at respectively one or more front axles (14) and one or more rear axles (15) of a tractor unit (10) of the articulated vehicle (1), uncoupled from its trailer (20), and the total tare weight is a tare weight of the entire articulated vehicle (1), in an empty state. The first dis-

tance is a distance between the one or more front axles (14) of the tractor unit (10) and the one or more rear axles (15) of the tractor unit (10). The second distance is a distance between the one or more front or rear axles (14,15) of the tractor unit (10) and the pivot joint (30) linking the tractor unit (10) to the trailer (20). The first and second loaded weights are weights at respectively the one or more front axles (14) and one or more rear axles (15) of the tractor unit (10) coupled to the trailer (20) holding the cargo, and the total loaded weight is a total weight of the articulated vehicle (1), in a loaded state.

[Fig.1]

**Description**

TECHNICAL FIELD

The disclosure relates to a method and system for measuring weight of a cargo of an articulated vehicle. The articulated vehicle comprises a tractor unit and a trailer holding the cargo, linked by a pivot joint.

BACKGROUND

For a variety of reasons, such as bookkeeping, customs formalities, inventory taking or invoicing, it is frequently required to weigh the cargo of freight vehicles. When arriving to a port, freight hub, silo, mine, factory, or cargo terminal to unload cargo, such a freight vehicle will typically be weighed in a loaded state upon arrival, to determine its total loaded weight, and in an empty state after unloading, to determine its tare weight. When cargo is to be loaded instead, the vehicle will be weighed in the empty state upon arrival to determine the tare weight, then in loaded state upon leaving, to determine its total loaded weight. In both cases the cargo weight can then be obtained by subtracting the tare weight form the total loaded weight. When a first cargo is to be unloaded and a second cargo loaded, the vehicle will even be weighed three times: a first time in a first loaded weight to determine a first loaded weight, a second time, after having unloaded the first cargo, in an empty state, so as to determine the tare weight, and a third time, after having loaded the second cargo, in a second loaded weight, to determine a second loaded weight. The weights of the first and second cargoes are then obtained by subtracting the tare weight from, respectively, the first and second loaded weights.

Typically, such weighing is performed on weighbridges. Such a weighbridge usually comprises a platform for supporting the vehicle and load cells under the platform, wherein the load cells are connected to a data processing unit for receiving weigh values from the load cells and adding them to calculate the empty or loaded weight of the vehicle. Each weighing operation usually requires at least 5 minutes, including travel time, weighing time, and ticket printing, but not including queuing, and at least one human operator as well as other resources to audit the weighing process. An efficient port will process a vehicle load or unload operation in 20 minutes for containers and 30 minutes for general cargo.

It has been proposed, for instance in Japanese Patent Application Publication JP 2016-102662 A, to avoid weighing the vehicle in an empty state again at each loading/unloading operation, and instead obtain the tare weight of the vehicle by identifying the vehicle and retrieving a previously stored corresponding tare weight from a database. However, the actual tare weight of the vehicle may vary depending on the quantity of fuel on board and even the weight of the driver, which will consequently affect the accuracy of the measurement of the cargo weight using a pre-registered tare weight.

SUMMARY

A first object of the disclosure is that of reducing the number of weighing steps for measuring weight of a cargo of an articulated vehicle, without reducing accuracy.

According to a first aspect of the disclosure, a method for measuring weight of a cargo of an articulated vehicle may comprise obtaining values of first, second and total tare weights, first and second distances, and first, second and total loaded weights, and calculating the weight of the cargo on the basis of the values of the first, second and total tare weights, first and second distances, and first, second and total loaded weights. The articulated vehicle may comprise a tractor unit and a trailer holding the cargo, linked by a pivot joint. The first tare weight may be a tare weight at one or more front axles of the tractor unit uncoupled from the trailer, the second tare weight may be a tare weight at one or more rear axles of the tractor unit uncoupled from the trailer, and the total tare weight may be a total weight of the articulated vehicle in an empty state. The first distance may be a distance between the one or more front axles of the tractor unit and the one or more rear axles of the tractor unit and the second distance a distance between the one or more front or rear axles of the tractor unit and the pivot joint. The first loaded weight may be a weight at the one or more front axles of the tractor unit coupled to the trailer holding the cargo, the second loaded weight may be a weight at the one or more rear axles of the tractor unit coupled to the trailer holding the cargo, and the total loaded weight may be a total weight of the articulated vehicle comprising the tractor unit and the trailer holding the cargo, in a loaded state.

In such an articulated vehicle, the total weight of the trailer, which is normally unaffected by any changes in either fuel or driver, is distributed between its axles and the pivot joint linking the trailer to the tractor unit. By obtaining tare and loaded weights at the front and rear axles of the tractor unit, as well as total tare and loaded weights, the distances between the front and rear axles of the tractor unit and between the pivot joint and the front or rear axles of the tractor unit, it is possible to calculate the weight transfer from the trailer to the tractor unit, and hence the increase in total weight of the trailer from the empty to the loaded state, which accurately represents the weight of the cargo.

In particular, the weight of the cargo may be calculated according to the equation:

$$W_C = W_L - W_T - (W_{T1} + W_{T2}) \frac{(d_1 - d_2)(W_{L1} - W_{T1}) - d_2(W_{L2} - W_{T2})}{d_1 W_{T1} - d_2(W_{T1} + W_{T2})}$$

wherein $W_C$ represents the weight of the cargo, $W_{T1}$, $W_{T2}$ and $W_T$ respectively represent the first, second and total tare weights, $W_{L1}$, $W_{L2}$ and $W_L$ respectively represent the first, second and total loaded weights, and $d_1$ and $d_2$ respectively represent the first and second distances. Alternatively, however, the weight of the cargo may be calculated applying an artificial neural network, previously trained with a training dataset comprising first, second and total tare weights, first, second and total loaded weights, and first and second distances for a plurality of different articulated vehicles, together with the respective cargo weights.

In order to obtain the values of the first, second and total loaded weights in a single step, the articulated vehicle may be weighed on a segmented weighbridge, comprising a first weighing platform for the one or more front axles of the tractor unit, a second weighing platform for the one or more rear axles of the tractor unit, and a third weighing platform for all axles of the trailer. Alternatively, however, the values of the first, second and total loaded weights may be obtained by moving the articulated vehicle over a single weighing platform so as to successively weigh the one or more front axles of the tractor unit, the one or more rear axles of the tractor unit, and all axles of the trailer.

The value of the first loaded weight may be obtained by weighing the one or more front axles of the tractor unit, the value of the second loaded weight may be obtained by weighing the one or more rear axles of the tractor unit and the value of the total loaded weight may be obtained by adding the first loaded weight, the second loaded weight and a weight value obtained by weighing all axles of the trailer.

The value of at least one of the first, second and total tare weights and first and second distances may be obtained by identifying the tractor unit and/or the trailer and retrieving previously stored data associated to the tractor unit and/or the trailer. In particular, the tractor unit and/or the trailer may be identified using an RFID transceiver secured to the tractor unit and/or the trailer and/or using automated image recognition, for example of the license plate of the tractor and/or trailer.

Nevertheless, the value of at least one of the first and second distances may be directly obtained using automated image recognition, alternatively and/or in combination with the identification of the tractor unit.

According to a second aspect of the disclosure, a system for measuring weight of the cargo of the articulated vehicle may comprise a weighing device and a data processing unit connected to the weighing device for obtaining the values of the first, second and total loaded weights. The data processing unit may also be adapted to obtain values of the first, second and total tare weights, and first and second distances, and to calculate the weight of the cargo on the basis of the values of the first, second and total tare weights, first and second distances, and first, second and total loaded weights.

In order to allow separate weighing of the front and rear axles of the tractor unit and the trailer axles in a single step, the weighing device may be a segmented weighbridge, comprising a first weighing platform for the one or more front axles of the tractor unit, a second weighing platform for the one or more rear axles of the tractor unit, and a third weighing platform for all axles of the trailer holding the cargo. Alternatively, however, the weighing device may comprise a single weighing platform for successive weighing of the axles.

The data processing unit may be adapted to identify the tractor unit and/or the trailer and retrieve previously stored data associated to the tractor unit and/or the trailer to obtain the value of at least one of the first, second and third tare weights and first and second distances. In particular, the system may further comprise an RFID reader connected to the data processing unit for identifying the tractor unit and/or the trailer by communication with an RFID transceiver secured to the tractor unit and/or the trailer. Alternatively to or in combination with this, the system may further comprise a camera connected to the data processing unit, and the data processing unit may be adapted to perform automated image recognition based on images captured by the camera.

A third aspect of the present disclosure relates to a computer-readable medium and/or computer program product comprising instructions that, when executed by the data processing unit of the system of the second aspect, cause said system to carry out the method of the first aspect.

The above summary of some example embodiments is not intended to describe each disclosed embodiment or every implementation of the invention. In particular, selected features of any illustrative embodiment within this specification may be incorporated into an additional embodiment unless clearly stated to the contrary.

BRIEF DESCRIPTION OF THE DRAWINGS

The invention may be more completely understood in consideration of the following detailed description of various embodiments in connection with the accompanying drawings, in which :

- FIG. 1 is a schematic view of an articulated vehicle on a weighbridge of a cargo weighing system according to a first embodiment of the invention ;
- FIG. 2 is a schematic view of the tractor unit of the articulated vehicle of Fig. 1, uncoupled from its trailer;
- FIG. 3 is a functional block diagram of the cargo weighing system according to the first embodiment of the invention ; and
- FIG. 4 is a schematic view of an articulated vehicle driving through a weighing station according to a second embodiment of the invention.

While the invention is amenable to various modifications and alternative forms, specifics thereof have been shown by way of example in the drawings and will be described in detail. It should be understood, however, that the intention is not to limit aspects of the invention to the particular embodiments described. On the contrary, the intention is to cover all modifications, equivalents, and alternatives falling within the scope of the invention.

DETAILED DESCRIPTION

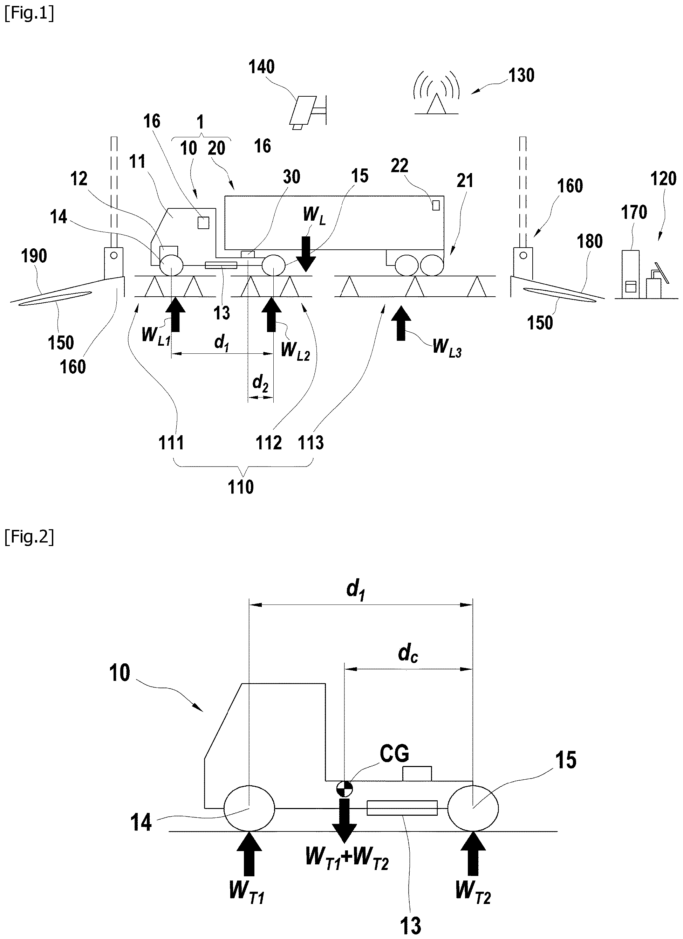

For the following defined terms, these definitions shall be applied, unless a different definition is given in the claims or elsewhere in this specification.
As used in this specification and the appended claims, the singular forms "a", "an", and "the" include plural referents unless the content clearly dictates otherwise. As used in this specification and the appended claims, the term "or" is generally employed in its sense including "and/or" unless the content clearly dictates otherwise.
The following detailed description should be read with reference to the drawings in which similar elements in different drawings are numbered the same. The detailed description and the drawings, which are not necessarily to scale, depict illustrative embodiments and are not intended to limit the scope of the invention. The illustrative embodiments depicted are intended only as exemplary. Selected features of any illustrative embodiment may be incorporated into an additional embodiment unless clearly stated to the contrary.
As illustrated on Figs. 1 and 2, an articulated vehicle 1 may comprise a tractor unit 10 and a trailer 20, linked through a pivot joint 30, commonly known as a "fifth wheel". The tractor unit 10 may comprise a driver's cab 11, a prime mover 12, a fuel tank 13, and wheeled front and rear axles 14, 15. The prime mover 12 may in particular be an internal combustion engine, although an electric engine, powered by batteries, fuel cells or an internal-combustion-engine-driven generator, may also be considered. The fuel tank 13 may be connected to the prime mover 12 for its fuel supply. The prime mover 12 may be operatively coupled to one or more of the front and/or rear axles 14, 15, possibly through a transmission, for propelling the articulated vehicle 1. Although, in the illustrated example, the tractor unit 10 has a single front axle 14 and a single rear axle 15, multiple front axles 14 and/or multiple rear axles 15 may also be considered. The front and rear axles 14, 15 may be separated by a first distance $d_1$, and a second distance $d_2$ may separate the pivot joint 30 from the rear axle 15. The trailer 20 may also comprise one or more wheeled rear axles 21 and contain a cargo. Each one of the tractor unit 10 and the trailer 20 may further comprise a unique identifier such as an RFID transceiver 16, 22.
A shown in Fig. 2, the tractor unit 10, when empty and uncoupled from the trailer 20, may exert a first tare weight $W_{T1}$ on the ground at the front axle 14 and a second tare weight $W_{T2}$ at the rear axle 15. The centre of gravity CG of the tractor unit 10 may then be at a distance $d_c$ of the rear axle 15 such that:

$$d_c = d_1 \frac{W_{T1}}{W_{T1} + W_{T2}}$$

The position of this centre of gravity CG and its distance $d_c$ to the rear axle 15 can be assumed to remain essentially constant independently of the weight of the driver and of the fuel contained in the fuel tank 13. The articulated vehicle 1, in an empty state, with the trailer 20 coupled to the tractor unit 10 through the pivot joint 30, may have a total tare weight $W_T$.
As shown back in Fig. 1, in a loaded state of the articulated vehicle 1, wherein the trailer 20 is coupled to the tractor unit 10 and carries a cargo, the tractor unit 10 may exert a first loaded weight $W_{L1}$ on the ground at the one or more front axle 14 and a second loaded weight $W_{L2}$ at the one or more rear axle 15, the trailer 20 may exert a third loaded weight $W_{L3}$ at the one or more trailer axle 21, and the articulated vehicle may have a total loaded weight $W_L$ equal to the sum of the first, second and third loaded weights $W_{L1}$, $W_{L2}$ and $W_{L3}$.
The total loaded weight $W_L$ of the articulated vehicle 1 can be considered to equal the sum of its total tare weight $W_T$, the weight $W_C$ of the cargo, and a weight difference $\Delta W$, due for instance to the crew and fuel in the tractor unit 10. Consequently, the cargo weight $W_C$ may be calculated as:

$$W_C = W_L - W_T - \Delta W$$

At the same time, assuming that the position of the centre of gravity CG of the tractor unit 10 remains substantially unchanged despite the weight difference $\Delta W$, the balance of the tractor unit 10 around its rear axle 15 imposes that:

$$W_P d_2 + (W_{T1} + W_{T2} + \Delta W)d_c = W_{L1}d_1$$

wherein $W_P$ represents the weight transfer from the loaded trailer 20 to the tractor unit 10 through the pivot joint 30. This weight transfer $W_P$ also corresponds to the sum of the first and second loaded weights $W_{L1}$, $W_{L2}$ minus the weight of the tractor unit 10, that is, the sum of the first and second tare weights $W_{T1}$, $W_{T2}$ and the weight difference $\Delta W$:

$$W_P = W_{L1} + W_{L2} - W_{T1} - W_{T2} - \Delta W$$

From these two latest equations, and the equation for the distance $d_c$, it is possible to deduce the following equation for the weight difference $\Delta W$:

$$\Delta W = (W_{T1} + W_{T2}) \frac{(d_1 - d_2)(W_{L1} - W_{T1}) - d_2(W_{L2} - W_{T2})}{d_1 W_{T1} - d_2(W_{T1} + W_{T2})}$$

Consequently, the cargo weight $W_C$ may be calculated using the following equation:

$$W_C = W_L - W_T - (W_{T1} + W_{T2}) \frac{(d_1 - d_2)(W_{L1} - W_{T1}) - d_2(W_{L2} - W_{T2})}{d_1 W_{T1} - d_2(W_{T1} + W_{T2})}$$

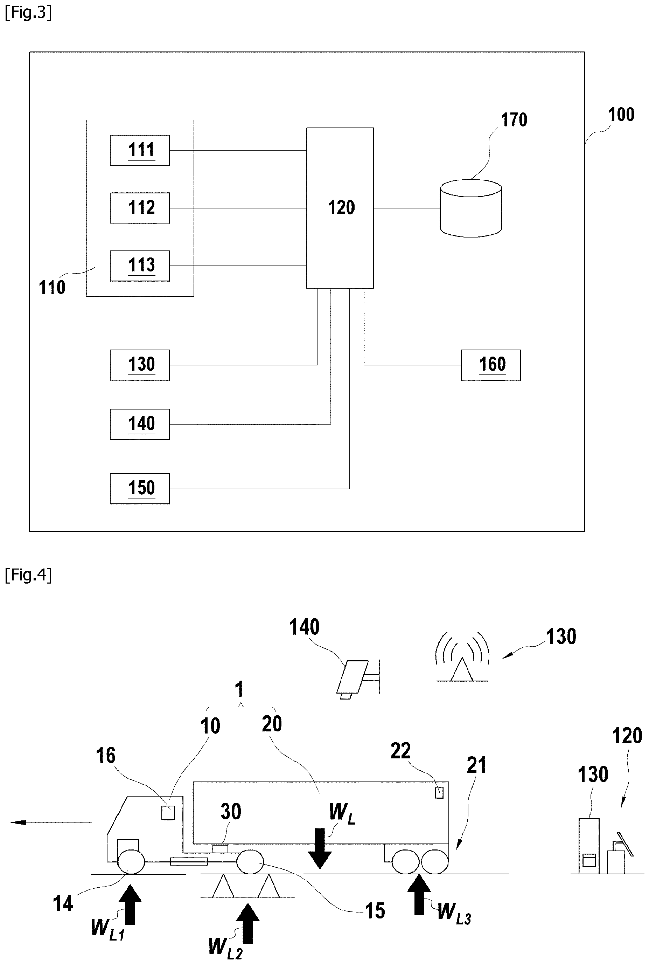

As shown in Figs. 1 and 3, a system 100 according to a first embodiment may comprise a weighing device 110 in the form of a segmented weighbridge comprising a first weighing platform 111, a second weighing platform 112 and a third weighing platform 113. Each one of these weighing platforms 111,112,113 comprises load cells connected to a data processing unit 120 so as to transmit measured weight values. The system 100 may further comprise an RFID reader 130, cameras 140, induction loops 150, barriers 160, and a data storage unit 170, each one of which may be connected to the data processing unit 120. In particular, the RFID reader 130 may be configured to receive identification data from the RFID transceivers 16, 22, and connected to the data processing unit 120 for transmitting those identification data to the data processing unit 120. The cameras 140 may be configured to capture images of the articulated vehicle 1 on the weighbridge, from any angle including from above and from below, and may be connected to the data processing unit 120 for transmitting data associated to those images to the data processing unit 120. The data processing unit 120 may be configured to apply machine learning, and in particular deep learning, to perform image recognition on the basis of these data, and eventually to identify the tractor unit 10 and/or the trailer 20 on the basis of identifying visual features, such as, e.g. license plates, in those data, alternatively to or in combination with the identification data from the RFID transceivers 16, 22. The induction loops 150 may be located at access and exit ramps 180, 190 of the weighbridge, configured to detect the access of the articulated vehicle 1 to the weighbridge and its exit from the weighbridge, and connected to the data processing unit 120 for transmitting said access and exit to the data processing unit 120. Other means for detecting access and exit of an articulated vehicle 1, such as for instance photoelectric cells or cameras, may however be considered alternatively or in combination to the induction loops 150. The barriers 160 may also be located at those access and exit ramps 180, 190 of the weighbridge, configured to be operable between open and closed positions, and may further be connected to the data processing unit 120 for their automated operation.

The data storage unit 170 may for instance take the form of a magnetic data storage unit, an optical data storage unit, or a solid-state data storage unit. It may contain a database of tractor units and trailers, linking identifying data thereof to respective specifications, such as any one of first, second and total tare weights $W_{T1}$, $W_{T2}$, $W_T$ and first and second distances $d_1$ and $d_2$ for each given combination of tractor unit and trailer. The database may further comprise reference data for comparison with data associated with images captured by the cameras 140, for example for identifying any substantial constructional modifications, such as for instance added fuel tanks, which may have an impact in the abovementioned specifications. The data processing unit 120 may be adapted to retrieve from the data storage unit 170, upon identification of a tractor unit 10 and trailer 20 on the weighing device 110, any one of the corresponding first, second and total tare weights $W_{T1}$, $W_{T2}$, $W_T$ and first and second distances $d_1$ and $d_2$ for that articulated vehicle 1.

Alternatively or in combination with that retrieval, the data processing unit 120 may be configured to obtain any one of the first and second distances $d_1$ and $d_2$ through automated image recognition from images captured by the cameras 140, possibly applying machine learning, and in particular deep learning.

The first, second and third weighing platforms 111, 112, 113 may be configured to be respectively placed under the one or more front axles 14 of the tractor unit 10, under the one or more rear axle 15 of the tractor unit, and under the one or more trailer axles 21. Consequently, the first weighing platform 111 may measure the first loaded weight $W_{L1}$ and the second weighing platform 112 the second loaded weight $W_{L2}$, whereas the total loaded weight $W_L$ may correspond to the sum of the weights measured by the first, second and third weighing platforms 111, 112, 113. The data processing unit 120 may thus be configured to calculate this total weight $W_L$ of the articulated vehicle 1 on the weighing device 110 by adding the first, second and third loaded weights $W_{L1}$, $W_{L2}$ and $W_{L3}$ respectively measured by the first, second and third weighing platforms 111, 112, 113. The data processing unit 120 may also be adapted to calculate the cargo weight $W_C$ based on these values of the first, second and total loaded weights $W_{L1}$, $W_{L2}$ and $W_L$, together with the previously obtained values of the first, second and total tare weights $W_{T1}$, $W_{T2}$, $W_T$ and first and second distances $d_1$ and $d_2$ for that articulated vehicle 1. In particular, the data processing unit 120 may be adapted to calculate the cargo weight $W_C$ using the abovementioned equation:

$$W_C = W_L - W_T - (W_{T1} + W_{T2}) \frac{(d_1 - d_2)(W_{L1} - W_{T1}) - d_2(W_{L2} - W_{T2})}{d_1 W_{T1} - d_2(W_{T1} + W_{T2})}$$

Alternatively, however, the data processing unit 120 may be configured to calculate the cargo weight $W_C$ based on these values of the first, second and total loaded weights $W_{L1}$, $W_{L2}$ and $W_L$, together with the previously obtained values of the first, second and total tare weights $W_{T1}$, $W_{T2}$, $W_T$ and first and second distances $d_1$ and $d_2$ for that articulated vehicle 1 using machine learning and in particular deep learning, and specifically by applying an artificial neural network, previously trained with a training dataset comprising first, second and total tare weights, first, second and total loaded weights, and first and second distances for a plurality of different articulated vehicles, together with the respective cargo weights.

The data processing unit 120 may in particular take the form of a programmable electronic microprocessor.

Therefore, in operation, the articulated vehicle 1 may drive up to the access ramp 180 of the weighing device 110, where its arrival may be detected by an induction loop 150 and/or other detection means installed therein, connected to the data processing unit 120. In response to this detection, if the weighing platforms 111, 112, 113 are available, the data processing unit 120 may command the opening of the access barrier 160, so that the articulated vehicle 1 may drive onto the weighing device 110 until the one or more front axles 14 and the one or more rear axles 15 of the tractor unit 10 are respectively placed onto the first and second weighing platforms 111, 112, and the one or more trailer axles 21 are placed onto the third weighing platform 113. Concurrently, the RFID reader 130 may receive identification data from the RFID transceivers 16, 22 and transmit those identification data to the data processing unit 120, and/or the cameras 140 may capture images of the articulated vehicle 1 and transmit data associated to those images to the data processing unit 120.

Based on the identification data received from the RFID transceivers 16, 22 over the RFID reader 130 and/or automated image recognition from the image data received from the cameras 140, the data processing unit 120 may identify the tractor unit 10 and trailer 20 of the articulated vehicle 1 and retrieve from the data storage unit 170, any one of the corresponding first, second and total tare weights $W_{T1}$, $W_{T2}$, $W_T$ and first and second distances $d_1$ and $d_2$ for that articulated vehicle 1. Alternatively or in combination with that retrieval, the data processing unit 120 may measure the values of any one of the first and second distances $d_1$ and $d_2$ from images captured by the cameras 140, using automated image recognition.

When the one or more front axles 14 and the one or more rear axles 15 of the tractor unit 10 are respectively placed onto the first and second weighing platforms 111, 112, and the one or more trailer axles 21 are placed onto the third weighing platform 113, the data processing unit may attribute to the first and second loaded weights $W_{L1}$ $W_{L2}$ the weight values respectively measured by the first and second weighing platforms 111, 112, and add these weight values to that measured by the third weighing platform 113 to obtain the total loaded weight $W_L$ of the articulated vehicle 1. The data processing unit 120 may then proceed to calculate the cargo weight $W_C$ based on these values of the first, second and total loaded weights $W_{L1}$, $W_{L2}$ and $W_L$, together with the previously obtained values of the first, second and total tare weights $W_{T1}$, $W_{T2}$, $W_T$ and first and second distances $d_1$ and $d_2$ for that articulated vehicle 1. At the end of this process, the data processing unit 120 may then command the opening of the exit barrier 160, so that the articulated vehicle 1 may leave the weighing device 110. Its exit may be detected by an induction loop 150 and/or other detection means installed in the exit ramp 190 and connected to the data processing unit 120, so that the availability of the weighing device 110 to other articulated vehicles may be registered. The data processing unit 120 may perform or command each operation of this process following instructions which may be stored in the form of a computer program in the data storage unit 170 and/or in another nonvolatile or volatile computer-readable data storage medium.

Although the weighing device 110 of the system 100 according to this first embodiment comprises three separate weighing platforms 111,112,113 for weighing the front, rear and trailer axles, in a system and method according to an alternative embodiment, illustrated by Fig. 4, a single weighing platform 111' may be used. In this embodiment, the data processing unit 120 may be adapted to register weight values measured by the single weighing platform 111' as the front, rear and trailer axles 14, 15 and 21 of articulated vehicle 1 successively roll over it and correspondingly attribute to the first loaded weight $W_{L1}$ the value measured as the one or more front axles 14 rolled over the weighing platform 111', to the second loaded weight $W_{L2}$ the value measured as the one or more rear axles 15 rolled over the weighing platform 111', and to the total loaded weight $W_L$ a sum of the values measured as the front, rear and trailer axles 14, 15 and 21 of articulated vehicle 1 successively rolled over the weighing platform 111'. The remaining elements of the system 100 according to this alternative embodiment may be analogous to those of the first embodiment, and therefore receive the same reference numbers.

In operation, the articulated vehicle 1 may thus drive over the single weighing platform 111', which may successively transmit to the data processing unit 120 the weigh values from the one or more front axles 14, the one or more rear axles 15 and the one or more trailer axles 21, and the data processing unit may accordingly attribute to the first loaded weight $W_{L1}$ the value measured as the one or more front axles 14 rolled over the weighing platform 111', to the second loaded weight $W_{L2}$ the value measured as the one or more rear axles 15 rolled over the weighing platform 111', and to the total loaded weight $W_L$ a sum of the values measured as the front, rear and trailer axles 14, 15 and 21 of articulated vehicle 1 successively rolled over the weighing platform 111', and subsequently calculate the cargo weight $W_C$, analogously to the first embodiment, based on these values of the first, second and total loaded weights $W_{L1}$, $W_{L2}$ and $W_L$, together with values of the first, second and total tare weights $W_{T1}$, $W_{T2}$, $W_T$ and first and second distances $d_1$ and $d_2$ for that articulated vehicle 1, which may also have been previously obtained in a manner analogous to the method of the first embodiment.

Those skilled in the art will recognize that the present invention may be manifested in a variety of forms other than the specific embodiments described and contemplated herein. Accordingly, departure in form and detail may be made without departing from the scope of the present invention as described in the appended claims.

## Claims

1. A method for measuring weight of a cargo of an articulated vehicle (1), said articulated vehicle (1) comprising a tractor unit (10) and a trailer (20) holding the cargo, linked by a pivot joint (30), the method comprising:

   obtaining values of first, second and total tare weights, wherein the first tare weight is a tare weight at one or more front axles (14) of the tractor unit (10) uncoupled from the trailer (20), the second tare weight is a tare weight at one or more rear axles (15) of the tractor unit (10) uncoupled from the trailer (20), and the total tare weight is a total weight of the articulated vehicle (1) in an empty state ;
   obtaining values of first and second distances, wherein the first distance is a distance between the one or more front axles (14) of the tractor unit (10) and the one or more rear axles (15) of the tractor unit (10) and the second distance a distance between the one or more front or rear axles (14,15) of the tractor unit (10) and the pivot joint (30) ;
   obtaining values of first, second and total loaded weights, wherein the first loaded weight is a weight at the one or more front axles (14) of the tractor unit (10) coupled to the trailer (20) holding the cargo, the second loaded weight is a weight at the one or more rear axles (15) of the tractor unit (10) coupled to the trailer (20) holding the cargo, and the total loaded weight is a total weight of the articulated vehicle (1) comprising the tractor unit (10) and the trailer (20) holding the cargo, in a loaded state; and
   calculating the weight of the cargo on the basis of the values of the first, second and total tare weights, first and second distances , and first, second and total loaded weights.

2. The method of claim 1, wherein the weight of the cargo is calculated according to the equation:

$$W_C = W_L - W_T - (W_{T1} + W_{T2}) \frac{(d_1 - d_2)(W_{L1} - W_{T1}) - d_2(W_{L2} - W_{T2})}{d_1 W_{T1} - d_2(W_{T1} + W_{T2})}$$

wherein $W_C$ represents the weight of the cargo, $W_{T1}$, $W_{T2}$ and $W_T$ respectively represent the first, second and total tare weights, $W_{L1}$, $W_{L2}$ and $W_{L3}$ respectively represent the first, second and total loaded weights, and $d_1$ and $d_2$ respectively represent the first and second distances.

3. The method of any one of claims 1 or 2, wherein the values of the first, second and total loaded weights are obtained by weighing the articulated vehicle (1), in a single step, on a segmented weighbridge, comprising a first weighing platform (111) for the one or more front axles (14) of the tractor unit (10), a second weighing platform (112) for the one or more rear axles (15) of the tractor unit (10), and a third weighing platform (113) for all axles (21) of the trailer (20).

4. The method of any one of claims 1 or 2, wherein the values of the first, second and total loaded weights are obtained by moving the articulated vehicle (1) over a single weighing platform (111') so as to successively weigh the one or more front axles (14) of the tractor unit (10), the one or more rear axles (15) of the tractor unit (10), and all axles (21) of the trailer (20).

5. The method of any one of the previous claims, wherein the value of the first loaded weight is obtained by weighing the one or more front axles (14) of the tractor unit (10), the value of the second loaded weight is obtained by weighing the one or more rear axles (15) of the tractor unit (10) and the value of the total loaded weight is obtained by adding the first loaded weight, the second loaded weight and a weight value obtained by weighing all axles (21) of the trailer (20).

6. The method of any one of the previous claims, wherein the value of at least one of the first, second and total tare weights and first and second distances is obtained by identifying the tractor unit (10) and/or the trailer (20) and retrieving previously stored data associated to the tractor unit (10) and/or the trailer (20).

7. The method of claim 6, wherein the tractor unit (10) and/or the trailer (20) are identified using an RFID transceiver (16,22) secured to the tractor unit (10) and/or the trailer (20).

8. The method of any one of claims 6 or 7, wherein the tractor unit (10) and/or the trailer (20) are identified using automated image recognition.

9. The method of any one of the previous claims, wherein the value of at least one of the first and second distances is obtained using automated image recognition.

10. A system (100) for measuring weight of a cargo of an articulated vehicle (1), said articulated vehicle (1) comprising a tractor unit (10) and a trailer (20) holding the cargo, linked by a pivot joint (30), the system comprising:

    a weighing device (110) ; and
    a data processing unit (120) connected to the weighing device (110) for obtaining values of first, second and total loaded weights, wherein the first loaded weight is a weight at one or more front axles (14) of the tractor unit (10) coupled to the trailer (20) holding the cargo, the second loaded weight is a weight at one or more rear axles (15) of the tractor unit (10) coupled to the trailer (20) holding the cargo, and the total loaded weight is total weight of the articulated vehicle (1) comprising the tractor unit (10) and the trailer (20) holding the cargo, in a loaded state ;
    the data processing unit (120) being adapted to also obtain values of first, second and third tare weights, and first and second distances, wherein the first tare weight is a tare weight at the one or more front axles (14) of the tractor unit (10) uncoupled from the trailer (20), the second tare weight is a tare weight at the one or more rear axles (15) of the tractor unit (10) uncoupled from the trailer (20), and the total tare weight is a total weight of the articulated vehicle (1) in an empty state, the first distance is a distance between the one or more front axles (14) of the tractor unit (10) and the one or more rear axles (15) of the tractor unit (10) and the second distance a distance between the one or more front or rear axles (14,15) of the tractor unit (10) and the pivot joint (30); and
    the data processing unit (120) being adapted to calculate the weight of the cargo on the basis of the values of the first, second and total tare weights, first and second distances, and first, second and total loaded weights.

11. The system (100) of claim 10, wherein the weighing device (110) is a segmented weighbridge, comprising a first weighing platform (111) for the one or more front axles (14) of the tractor unit (10), a second weighing platform (112) for the one or more rear axles (15) of the tractor unit (10), and a third weighing platform (113) for all axles (21) of the trailer (20) holding the cargo.

12. The system (100) of claim 10, wherein the weighing device (110) comprises a single weighing platform (111').

13. The system (100) of any one of claims 10 to 12, wherein the data processing unit (120) is adapted to identify the tractor unit (10) and/or the trailer (20) and retrieve previously stored data associated to the tractor unit (10) and/or the trailer (20) to obtain the value of at least one of the first, second and total tare weights and first and second distances.

14. The system (100) of claim 13, further comprising an RFID reader (130) connected to the data processing unit (120) for identifying the tractor unit (10) and/or the trailer (20) by communication with an RFID transceiver (16,22) secured to the tractor unit (10) and/or the trailer (20).

15. The system (100) of any one of claims 10 to 14, further comprising a camera (140) connected to the data processing unit (120), wherein the data processing unit (120) is adapted to perform automated image recognition based on images captured by the camera (140).

16. A computer-readable medium comprising instructions that, when executed by the data processing unit (120) of the system (100) of any one of claims 10 to 15, cause said system (100) to carry out the method of any one of claims 1 to 9.

[Fig.1]

[Fig.2]

[Fig.3]

[Fig.4]

EP 4 198 463 A1

Europäisches
Patentamt
European
Patent Office
Office européen
des brevets

# EUROPEAN SEARCH REPORT

**Application Number**

EP 21 21 5756

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 03/044471 A2 (SCANIA CV ABP [SE]; NORDLOEF HENRIC [SE]) 30 May 2003 (2003-05-30) * abstract; figures 1,2 * * page 1, line 24 – page 2, line 2 * * page 3, lines 12-19 * * page 5, line 21 – page 6, line 8 * * page 6, lines 20-27 * ----- | 1-16 | INV. G01G19/02 |
| A | WO 2008/149607 A1 (ISUZU MOTORS LTD [JP]; IWAMA TOSHIHIKO [JP]) 11 December 2008 (2008-12-11) * abstract; figures 1,2 * ----- | 1-16 | |

**TECHNICAL FIELDS SEARCHED (IPC)**

G01G

The present search report has been drawn up for all claims

| Place of search | Date of completion of the search | Examiner |
|---|---|---|
| The Hague | 20 May 2022 | Mihai Vasile |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
......................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 21 5756

This annex lists the patent family members relating to the patent documents cited in the above-mentioned European search report.
The members are as contained in the European Patent Office EDP file on
The European Patent Office is in no way liable for these particulars which are merely given for the purpose of information.

20-05-2022

| Patent document cited in search report | | Publication date | Patent family member(s) | | Publication date |
|---|---|---|---|---|---|
| WO 03044471 | A2 | 30-05-2003 | AU 2002339813 | A1 | 10-06-2003 |
| | | | DE 10297346 | T5 | 27-01-2005 |
| | | | WO 03044471 | A2 | 30-05-2003 |
| WO 2008149607 | A1 | 11-12-2008 | JP 4169082 | B1 | 22-10-2008 |
| | | | JP 2008302865 | A | 18-12-2008 |
| | | | WO 2008149607 | A1 | 11-12-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016102662 A